Europäisches Patentamt

European Patent Office

Office européen des brevets

(19)

(11) Publication number: **0 097 151**
**B1**

## (12) EUROPEAN PATENT SPECIFICATION

(45) Date of publication of patent specification: **12.03.86**

(51) Int. Cl.⁴: **B 65 G 21/14** // B65G7/00

(21) Application number: **82900265.8**

(22) Date of filing: **29.12.81**

(86) International application number:
**PCT/SE81/00396**

(87) International publication number:
**WO 83/02263 07.07.83 Gazette 83/16**

(54) **ARRANGEMENT FOR TRANSFERRING HEAVY WORK PIECES.**

(43) Date of publication of application:
**04.01.84 Bulletin 84/01**

(45) Publication of the grant of the patent:
**12.03.86 Bulletin 86/11**

(84) Designated Contracting States:
**AT BE CH DE FR GB LI NL SE**

(56) References cited:
**DE-A-1 756 207**
**DE-B-1 282 551**
**US-A-2 760 617**
**US-A-3 068 983**
**US-A-3 225 879**

(73) Proprietor: **SCHEDWIN, Sven-Erik**
**Box 8280**
**S-Falun (SE)**

(72) Inventor: **SCHEDWIN, Sven-Erik**
**Box 8280**
**S-Falun (SE)**

(74) Representative: **Bjellman, Lennart Olov Henrik et al**
**DR. LUDWIG BRANN PATENTBYRÄ AB**
**Drottninggatan 7 Box 1344**
**S-751 43 Uppsala (SE)**

Courier Press, Leamington Spa, England.

EP 0 097 151 B1

## Description

The present invention relates generally to an arrangement for transferring heavy work pieces from a transport or storage position to a working or machining position and reverse, and is especially intended for a pallet changer for transferring heavy work pieces from e.g. a conveyor belt to a machining centre and back.

For operation systems with machining centres there does presently exist a great number of solutions regarding pallet handling, but most of these solutions are founded on the same basic principles. Thus, it is usual to start from a pallet storage of a rotary type and usually with 6, 8 or 10 pallets. From this storage the pallets are transferred to the machining centre by means of pallet changer positioned directly adjacent the machining position. The disadvantage of such an equipment is that the pallet changer has such a short reach that it can only serve one machining centre and consequently there is required for each machining centre an equipment according to the above which equipment costs in the order of 200.000 $.

In order to reduce these costs other arrangements have been developed and in accordance with EP—A—0 001 152 there has e.g. been suggested to combine the pallet storage and the pallet changer in one unit, but also this arrangement suffers from the disadvantages that it has a very short reach and that it consequently must be positioned close to the machining centre to be served. Said arrangement does, as well as the above mentioned arrangements with separate pallet storages and pallet changers, suffer from the disadvantage that it is necessary to decide in advance the exact number of pallets in the pallet storage (as mentioned usually 6, 8 or 10 pallets), and thus the whole pallet storage must be changed if, at a later stage it appears that an increased number of pallets is necessary for a certain manufacturing.

Even if, as indicated above, some efforts have been made to lower the costs for the pallet handling, is has previously not been possible to solve the problem of serving a plurality of processing machines by means of one and the same unit, which solution would bring about a drastic lowering of the costs. It is true that for smaller, lighter details it is possible to use a transferring arm of the industrial robot type in order to supply work pieces for machining, but for work pieces weighing up to 2 tons such a solution is not possible since the transferring arms are too weak. Thus, the problem is that by means of the known arrangements it is not possible to simultaneously serve several processing machines when the work pieces weigh in the order of 2 tons and more. The reason for this is that the existing arrangements capable of supporting work pieces weighing 2 tons and more have a relatively short reach which is not at all sufficient for permitting the same arrangement to serve several machines. The space required for the machines makes it necessary for the arrangement to have a capacity to transfer work pieces approximately 3 metres or more between the storage position and the machining position. It is true that a system has been developed according to which an electric trolly, guided by means of electrical circuits laid out in the floor, serves several processing machines from a central storage, but besides the fact that this system involves very high investment costs it also requires a very great floor space at the same time as the flexibility is restricted as regards future changes in the planning of the work shop.

The purpose of the invention is thus to provide an improved arrangement of the kind indicated in the introduction, which arrangement makes it possible to transfer heavy work pieces a rather long distance between a storage or transport position and a machining position and which arrangement in spite of this is relatively cheap. This purpose is achieved by means of an arrangement indicated in claim 1.

The invention is more closely described below in connection to the enclosed drawings in which,

Fig. 1 is a schematic plan view seen from above of an embodiment of the invention included in a manufacturing system comprising several processing units, and

Fig. 2 is a schematic side view, partly in section, of the embodiment according Fig. 1.

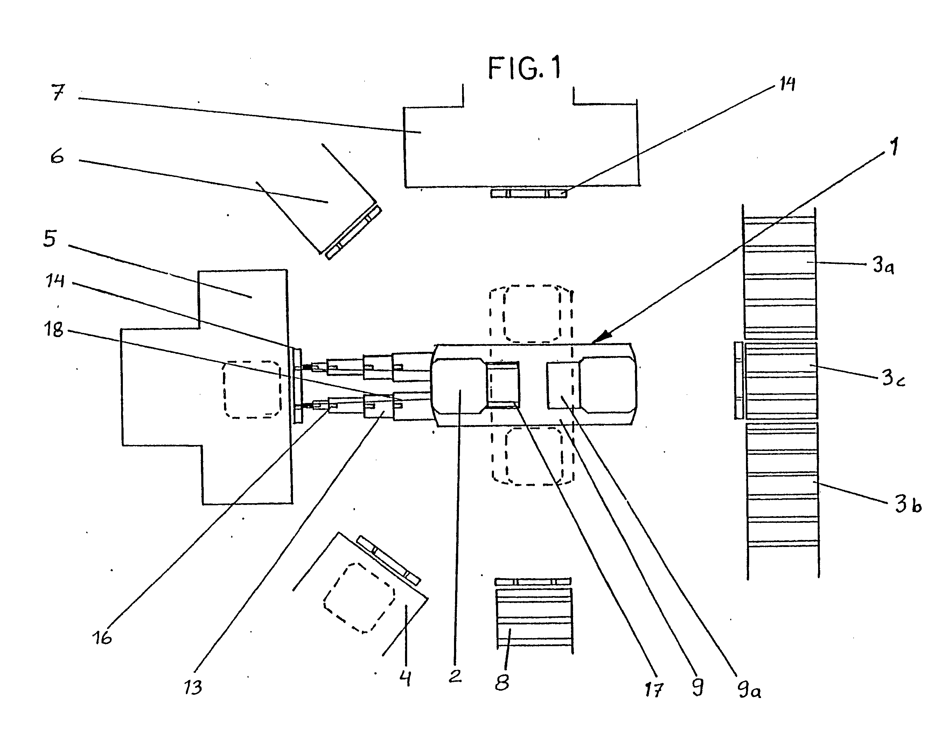

In Fig. 1 an embodiment of the invention is illustrated provided on a pallet changer, which generally is designated by the numeral 1, and which for the purpose of exemplification is included in a manufacturing system where pallets 2 through conveyor belts 3a and 3b are fed from setting-up stations and are supplied to a position 3c (may e.g. comprise a rotary table for aligning the work pieces set-up on the pallets from a position suitable for feeding and to a position suitable for the machining or processing) from which the work pieces are fetched by means of the transfer arrangement. By means of this transfer arrangement the pallets fetched from position 3c may then in turn be transferred to a first processing machine 4 which may e.g. be un upright drilling machine (in the case where horizontal machining centres are used which cannot process the upper side of the work piece), a first machining centre 5, e.g. a washing station 6, a second machining centre 7 and to a conveyor belt 8 for feeding out the finished machine detail. It should however be clearly understood that the manufacturing system in connection to which the arrangement according to the invention is described simply is exemplifying and does in no sense may be regarded as delimiting the invention. Thus, it should be evident that the arrangement according to the invention may be used in any other suitably constructed manufacturing system.

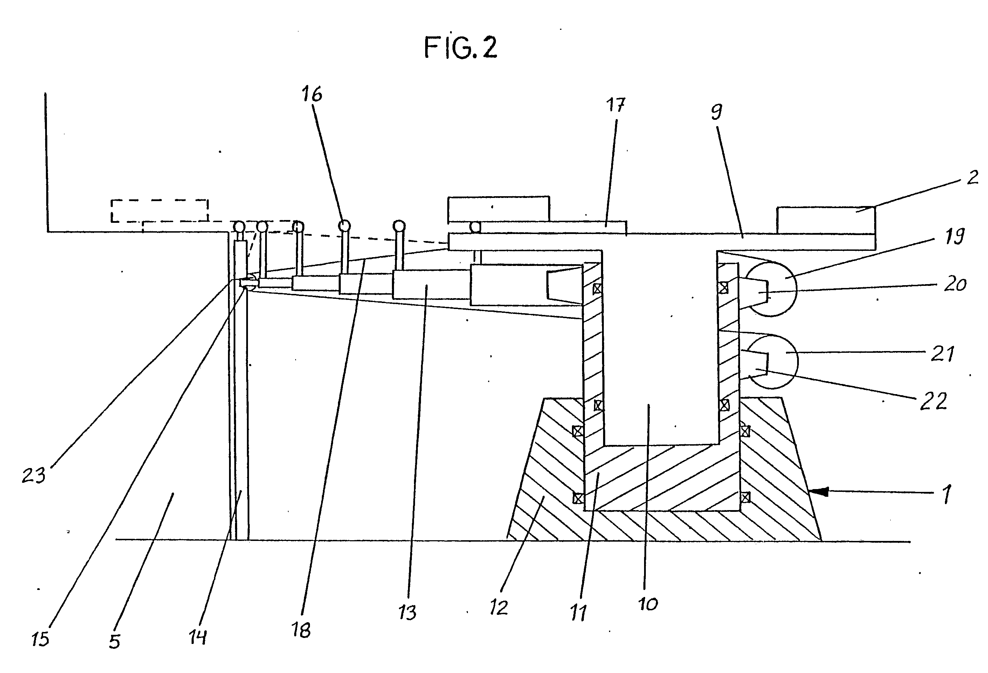

From Figs. 1 and 2 it is also clear that the transfer arrangement 1 basically consists of a table 9 on which the pallets 2 are received. The table 9 is in the illustrated embodiment, and seen from above, essentially rectangular in shape and is intended to support two pallets. It is obviously also possible to use other shapes for the table 9, e.g. for supporting more than two pallets, but in most cases this is not necessary and would only make the arrangement more expensive. As is clear from the Figures the two pallets are supported close to the short edges of the table 9 and moreover the table (Fig. 2) is provided with a central downwardly directed column 10 by means of which it is journalled in a housing 11 in such a way that it is rotatable over 360 degrees in relation to the housing and that it is vertically adjustable. The driving of the table, for the rotary movement as well as for the vertical adjustment, is typically achieved by means of hydraulic motors (not shown). This manoeuvrability for the table will be described more closely below.

The housing 11 which preferably has a generally cylindrical shape and which surrounds the main portion of the column 10 is in turn rotatably journalled in a base 12 resting on the floor of the work shop or the like. In the upper portion of the housing 11, that is adjacent the table 9, a number, preferably two, telescopically extendable arms 13 are positioned. In the illustrated embodiment the arms 13 consist of two telescopic cylinders which are single acting, that is which are extended by means of hydraulic fluid but which are retracted mechanically and possibly counteracting a low, continuous hydraulic pressure. It is naturally also possible with other configurations for the arms 13 and as examples it can be mentioned that extendable plates in layers on top of each other or arms in the shape of U-beams with stepwise different dimensions, for fitting into each other may be used.

Adjacent each machining position that the transfer arrangement shall serve a support means 14 is arranged which on a level with the arms 13 is provided with recesses 15 which engage the outermost sections of the arms 13 when the arms are fully or partly extended. In this way the arms 13 will, in their fully or partly extended position (depending upon the positioning of the processing machine), "form a bridge" between the transfer arrangement and the processing machine to be served, and on this "bridge" the pallets may in turn be transferred to the processing machine in question.

It should be pointed out that within the scope of the invention the support means can be modified in different ways. Thus, the support means may alternatively be fixed to the outer ends of the arms and may be brought out and back together with the arms when they are manoeuvred, possibly with a guide-way provided in the floor of the workshop in order to guide the lower end of the support means. It is likewise possible to provide a support means directly on the processing machine or on the conveyor, as a part thereof, or to arrange the recesses, which engage the outer ends of the arms, directly in the machine or conveyor structure.

For the above mentioned purpose of "forming a bridge" each section, except the last one, in each arm 13 is adjacent its outer end provided with a roller 16. In the extended position of the arms 13 these rollers do, possibly together with a roller on top of the support means 14, form a track for a carriage 17 which in its most unsophisticated design may consist of two interconnected U-beams positioned in such a way that the rollers 16 run in the beams engaging the inner surfaces of their free legs and in such a way that the rollers are enclosed from above and from below by the beams. In a way that will be described more closely below the beams of the carriage 17 will fit in corresponding recesses in the pallets in order to engage the pallets like the forks of a piler truck and to transport said pallets. For performing this movement of the carriage this is connected to wires 18 which by means of pulleys 19 at a first motor 20, freely rotating pulleys 23 connected to the outer ends of the arms 13 and pulleys 21 by another motor 22 may be operated in the desired way by means of said motors which preferably are hydraulic motors. In its position retracted towards the table 9 the carriage 17 fits in corresponding cut-in portions 9a in the short edges of the table 9.

The mode of operation of the arrangement will be described below with reference to the transferring of a work piece from the pallet changer 1 to a machining position and back. Hereby the housing 11 is placed in such a position that the arms 13 point towards the processing machine 5 and the arms are in a retracted position. The work piece to be processed in said machine is set-up on a pallet 2 which is brought forward for the transferring to the processing machine by the rotation of the table 9 by means of the above mentioned, not shown, hydraulic motor. During this rotational movement of the pallet towards the intended position the table 9 is in its elevated position, whereby the table 9 may rotate separated from the carriage 17. When the table has assumed the position illustrated by means of full lines of Fig. 1 it is lowered down over the carriage 17 so that the "forks" of the carriage engage the corresponding recesses in the bottom of the pallet 2. Thus the pallet now rests only on the carriage 17 at a distance above the table 9 (Fig. 2).

At this stage hydraulic fluid is supplied to the telescopic cylinders 13 whereby these are extended into engagement with the recesses 15 of the support means 14. When the telescopic cylinders 13 are extended and anchored in the recesses 15 the hydraulic motors 20 and 22 are activated whereby the carriage 17, by means of the wires 18, is pulled out onto the rollers 16 and is pulled forward to a position shown with dotted lines in Fig. 2 for delivering the pallet 2 onto the processing machine 5. Depending upon the type of processing machine the pallet 2 may then be lifted from the carriage by means of a rising plate in the processing machine or the pallet may be lowered down into a fixture. In the latter case this lowering is achieved due to the fact that the support means 14 is vertically adjustable by means of e.g. a hydraulic cylinder. In this case the telescopic cylinder 13 must naturally also be pivotally attached to the housing 11 in order to permit the lowering down of the pallet into the fixture of the processing machine and to permit lifting of the pallet therefrom after the completed machining.

When the pallet has been delivered the motors 20 and 22 are reversed whereby the carriage is pulled back over the rollers 16 and into the cut-in portion 9a in the table 9. The telescopic cylinders 13 are then retracted, e.g. counteracting a low constant hydraulic pressure in order to provide a smoother travel, by e.g. blocking the motor 20 and activating the motor 22 whereby the wires 18 that are wound-up simultaneously pull back the telescopic cylinders 13 by means of the pulleys 23 attached to the cylinders 13. When the cylinders 13 are retracted the table 9 is lifted to its raised position and after that the housing 11 with the telescopic cylinders 13 and table 9 may be rotated for performing desired operations during the machining of the work piece in the machine 5.

When the machining of this work piece is finished the arrangement is returned to the same initial position but this time without any pallet at the end of the pallet changer facing the processing machine 5. The telescopic cylinders 13 are extended to engage the recess 15 and the hydraulic motors 20 and 22 are activated for pulling out the carriage 17 onto the rollers 16 and towards the processing machine 5. When the pallet 2 with the work piece has been repositioned on the carriage, either by lowering the pallet or by raising the carriage as described above, the motors 20 and 22 are reversed and the carriage is pulled back to its position in the cut-in portion in the table 9. Finally, the telescopic cylinders 13 are retracted and after that the work piece is transferred to the next machining position in a corresponding manner.

Even if the invention has been described and illustrated herein with reference to a pallet changer in a manufacturing system with machining centres it should be obvious to a man skilled in the art that within the scope of the invention the arrangement may be modified and adapted for use in other manufacturing systems where heavy work pieces need to be transferred e.g. between a transport or storage position and a machining position. As an example of this the solution proposed according to the invention, namely that the distance between e.g. the storage position and the machining position is bridged by means of a pair of telescopic, extendable arms which in their partly or fully extended position engage and are supported by support means, may also be embodied in such a way that the arms with their inner ends are rigidly or pivotally attached directly to the processing machine or the like, and are extendable towards a conveyor belt for directly fetching work pieces therefrom or delivering work pieces thereto. A number of processing machines lined up in a row and equipped in the described way could then be served by a straight conveyor belt, from which the machines fetch work pieces by means of the extendable arms. Consequently the scope of the invention is only determined by means of the enclosed claims.

## Claims

1. Arrangement for transferring heavy work pieces from a transport or storage position to at least one machining position or reverse, characterized by a pair of arms (13) that are telescopically extendable for bridging the distance between said positions and by support means (14, 15) which, in the fully or partly extended position for the arms (13) engage and support the arms adjacent their outer ends.

2. Arrangement according to claim 1, characterized in that the arms (13) which their inner ends are attached to the outside of a housing (11) which is rotatably journalled in a base (12) and in that a table (9) for supporting one or more workpieces is in turn rotatably journalled in said housing.

3. Arrangement according to claim 1 or 2, characterized in that in the outer ends of the respective sections in the telescopic arms (13) rollers (16) are journalled which together form a path for a carriage (17) on which the work piece is directly or indirectly supported by the transferring thereof from a storage position to a machining position or reverse.

4. Arrangement according to claim 3, characterized in that the carriage (17) is movable along the path formed by the rollers (16) by means of wires (18) which are attached to the carriage and which are manoeuvred by means of hydraulic motors (20, 22) through pulleys (19, 21 and 23).

5. Arrangement according to any of the preceding claims, characterized in that the telescopic, extendable arms (13) are single-acting and are extended by means of hydraulic fluid but are retracted, counteracting a constant low hydraulic pressure, by means of the wires (18) by blocking one of the hydraulic motors (20) and manoeuvring the other hydraulic motor (22) for winding-up the wires (18).

6. Arrangement according to any of the preceding claims, characterized in that the support means (14) is vertically adjustable by means of a suitable drive for lowering down work pieces into the machining position and lifting up work pieces from the machining position respectively and in that the telescopic, extendable arms (13) in their inner ends are pivotally attached to the housing (11).

## Patentansprüche

1. Anordnung zum Fördern schwerer Werkstücke von einer Transport- oder Lagerungsposition zu wenigstens einer Bearbeitungsposition oder umgekehrt, gekennzeichnet durch ein teleskopisch ausfahrbares Armpaar (13), zur Überbrückung des Abstandes zwischen den genannten Positionen, und durch Stützeinrichtungen (14, 15), die in der vollständig oder teilweise ausgefahrenen Position der Arme (13) mit diesen in Eingriff stehen und sie an ihren äußeren Enden anliegend abstützen.

2. Anordnung nach Anspruch 1, dadurch gekennzeichnet, daß · die Arme (13) mit ihren inneren Enden an der Außenseite eines Gehäuses (11) befestigt sind, das drehbar in einem Sockel (12) gelagert ist, und wobei ferner ein Auflagetische (9) zum Auflagern von einem oder mehreren Werkstücken in dem Gehäuse (11) drehbar gelagert ist.

3. Anordnung nach Anspruch 1 oder 2, dadurch gekennzeichnet, daß in den äußeren Enden der jeweiligen Teilstücke der teleskopischen Arme (13) Rollen (16) gelagert sind, die gemeinsam einen Weg für einen Wagen (17) bilden, der das Werkstücke direkt oder indirekt während der Förderung von der Lagerungsposition zur Bearbeitungsposition oder umgekehrt trägt.

4. Anordnung nach Anspruch 3, dadurch gekennzeichnet, daß der Wagen (17) entlang dem durch die Rollen (16) gebildeten Weg mittels an dem Wagen befestigter Drähte (18) bewegbar ist, wobei die Drähte mittels Hydraulikmotoren (20, 22) über Seilscheiben (19, 21 und 23) betätigt werden.

5. Anordnung gemäß einem der vorhergehenden Ansprüche dadurch gekennzeichnet, daß die teleskopartig ausfahrbaren Arme (13) einfachwirkend ausgebildet sind und mittels Hydraulikflüssigkeit ausgefahren werden, jedoch eingefahren werden, indem einem konstanten niedrigen Hydraulikdruck durch die Arbeitsweise der Drähte (18) entgegengewirkt wird, wobei einer der Hydraulikmotoren (20) blockiert und der andere Hydraulikmotor (22) zum Aufwickeln des Seiles (18) betätigt wird.

6. Anordnung gemäß einem der vorhergehenden Ansprüche, dadurch gekennzeichnet, daß die Stützeinrichtung (14) vertikal mittels eines geeigneten Antriebes zum Absenken der Werkstücke in die Bearbeitungsposition bzw. Anhebung der Werkstücke von der Bearbeitungsposition verstellbar ist, wobei die teleskopisch ausfahrbaren Arme (13) an ihren inneren Enden drehbar am Gehäuse (11) befestigt sind.

**Revendications**

1. Agencement pour le transfert de pièces à usiner lourdes, d'une position de transport ou de stockage à au moins une position d'usinage ou inversement, caractérisé en ce qu'il comprend deux bras (13) qui sont télescopiquement extensibles pour franchir la distance entre les dites positions, et des moyens d'appui (14, 15) qui, dans la position d'extension totale ou partielle des bras (13), viennent en contact avec les bras et les supportent près de leurs extrémités extérieures.

2. Agencement selon la revendication 1, caractérisé en ce que les bras (13) sont fixés, à leurs extrémités intérieures, à l'extérieur d'un boîtier (11) qui est supporté de façon tournante dans un socle (12), et en ce qu'une table (9) prévue pour supporter une ou plusieurs pièces à usiner est elle-même supportée de façon tournante dans le boîtier.

3. Agéncement selon la revendication 1 ou 2, caractérisé en ce que, dans les extrémités extérieures des éléments respectifs des bras télescopiques (13), des rouleaux (16) sont montés de façon tournante et constituent ensemble un chemin pour un chariot (17) sur lequel la pièce à usiner est supportée directement ou indirectement, par son transfert d'une position de stockage à une position d'usinage ou inversement.

4. Agencement selon la revendication 3, caractérisé en ce que le chariot (17) est déplaçable le long du chemin formé par les rouleaux (16), au moyen de câbles (18) qui sont attachés au chariot et qui sont manoeuvrés par des moteurs hydrauliques (20, 22) par l'intermédiaire de poulies (19, 21 et 23).

5. Agencement selon l'une quelconque des revendications précédentes, caractérisé en ce que les bras télescopiques extensibles (13) sont à simple effet et sont mis en extension au moyen d'un fluide hydraulique mais sont rétractés, contre l'action d'une basse pression hydraulique constante, au moyen des câbles (18), par blocage d'un des moteurs hydrauliques (20) et manoeuvre de l'autre moteur hydraulique (22) pour l'enroulement des câbles (18).

6. Agencement selon l'une quelconque des revendications précédentes, caractérisé en ce que les moyens d'appui (14) sont réglables verticalement à l'aide d'un entraînement approprié, pour abaisser les pièces à usiner dans la position d'usinage et pour soulever les pièces de la position d'usinage, respectivement, et en ce que les bras télescopiques extensibles (13) sont attachés de façon pivotante à leurs extrémités intérieures au boîtier (11).

FIG.1

FIG.2